# EUROPÄISCHE PATENTSCHRIFT

(11) **EP 0 942 107 B1**
(45) Veröffentlichungstag und Bekanntmachung des Hinweises auf die Patenterteilung: **07.01.2004**
(21) Anmeldenummer: 99104187.2
(22) Anmeldetag: 02.03.1999
(51) Int. Cl.: E04B 1/94, F16L 5/04

(54) **Schaumstoffkörper mit flammhemmenden Eigenschaften, insbesondere für Bauzwecke**
Foamed body with flame retardant properties, especially for building construction
Elément en mousse ayant des propriétés pare-flamme, en particulier pour le bâtiment

(30) Priorität: 09.03.1998 DE 19809973
(43) Veröffentlichungstag der Anmeldung: 15.09.1999
(73) Patentinhaber: ISO-Chemie GmbH, 73431 Aalen (DE)
(72) Erfinder: Schiano, Peter, Dipl.-Ing., 86825 Bad Wörishofen (DE)
(74) Vertreter: Körner, Ekkehard, Dipl.-Ing.

(56) Entgegenhaltungen:
- WO-A-92/18584
- DE-A- 3 735 779
- DE-U- 8 715 428
- GB-A- 2 181 093
- US-A- 4 058 643
- US-A- 5 173 515

## Beschreibung

Die Erfindung betrifft einen Schaumstoffkörper mit flammhemmenden Eigenschaften, insbesondere für die flammhemmende Abdichtung von Fugen und Wanddurchbrüchen in Bauwerken und dergleichen.

Bei der Errichtung von Bauwerken aller Art treten sowohl Anschlußfugen, Wand- und Deckenfugen als auch Stoßfugen auf. Die Fugenbreiten reichen dabei von wenigen Millimetern bis zu 150 mm und werden häufig einfach mit Mörtel verschlossen. Weiterhin gibt es Wanddurchbrüche, z.B. für Rohrleitungen und dgl., die verschlossen werden müssen.

Bei Brandwänden ist der Einsatz von Mörteln nicht möglich, da sie keine dauerelastischen Eigenschaften aufweisen, die man zur Aufnahme der gegenseitigen Bewegung der durch den Mörtel abgedichteten Bauelemente braucht.

Üblicherweise greift man dann auf mit Mineralwolle hinterfüllte Systeme zurück. Diese Methode läßt hinsichtlich der Feuerbständigkeit häufig, insbesondere wegen mangelhafter Ausführung der Arbeiten, zu wünschen übrig und ist für den Verarbeiter nicht angenehm ausführbar und zudem zeitaufwendig.

Eine weitere, wie z.B. in GB-A-2 181 093, DE-A-3 735 779 oder DE-U-87 15 428.5 offenbarte, Möglichkeit zur Fugenabdichtung sind sogenannte Brandschutzschnüre, Brandschutzbänder oder Streifen aus geschäumten Polymeren (hauptsächlich auf PU-Basis), die auf unterschiedlichste Weise funktionieren. Allen gemeinsam ist, daß sie intumeszierende Substanzen oder Gemische enthalten, die die Fuge vor Rauch und Feuerdurchtritt verschließen sollen. Als intumeszierende Rohstoffe kommen Blähgraphite, Mischungen aus Melamin / Pentaerythrit / Ammonium-Polyphosphat oder Wasserglas (Na-Silikat-Lösungen) vor.

Hauptnachteile dieser Systeme sind die mangelnde Beständigkeit/Dichtigkeit gegen Wasser, die schwierige Applikation oder das manchmal notwendige Verkleben mit einem Kitt.

Der Erfindung liegt die Aufgabe zugrunde, einen Schaumstoffkörper anzugeben, der ein feuerbeständiges Fugenmaterial realisiert und der sehr verarbeitungsfreundlich, d.h. schnell und einfach zu montieren ist, und der Alltagsfunktionen (z.B. Schall- und Wärmeschutz, Wasserdichtigkeit) eines Dichtungsmaterials erfüllt. Dabei soll es sich bei den Fugenflanken um mineralische, als auch um metallische Untergründe handeln können.

Diese Aufgabe wird durch die im Anspruch 1 angegebenen Merkmale gelöst. Vorteilhafte Ausgestaltungen der Erfindung und Anwendungen sind Gegenstand weiterer Ansprüche.

Der erfindungsgemäße Schaumstoffkörper besteht im wesentlichen aus einem PU-Schaumstoff als Kern, der mit einer wässrigen Tränkung imprägniert ist, wobei die Tränkung vorzugsweise aus anorganischen Füllmitteln und Brandschutzmitteln, vorzugsweise auf Phosphat-Basis, aufgebaut ist. Als Bindemittel dient dabei vorzugsweise eine wässrige Acrylatdispersion.

Die Tränkung erlaubt es dem Schaumstoff außerdem nach seiner Komprimierung, bei späterer Applikation langsam aufzugehen und die Fuge vollständig auszufüllen.

Weiteres wichtiges Merkmal der Erfindung ist eine auf den Schaumstoffkern aufkaschierte Selbstklebefolie (nachfolgend SK-Folie genannt), die nicht nur eine Montagehilfe ist, sondern auch eine entscheidende Rolle im Brandfalle spielt.

Im Brandfalle verkohlt nämlich der PU-Schaumstoff und bildet ein stabiles Schaumgerüst aus, das die Rauch- und Feuerausbreitung durch die Fuge in angrenzende Brandabschnitte verzögert. Bei besonderen Anforderungen z.B. extrem breiten Fugen oder bei der Anwendung auf metallischen Untergründen kann die Haftung zwischen Fugenflanke und SK-Folie/PU-Schaum infolge Erweichung oder Schrumpf verloren gehen. Aus diesem Grunde ist die SK-Folie brandschutztechnisch, d.h. intumeszierend, ausgerüstet.

Für die Herstellung dieser Folie kommen mehrere Möglichkeiten in Betracht. Vorzugsweise wird auf ein doppelseitiges Klebeband z.B. aus Polyethylen, Polyester (entspricht SK-Folie) einseitig ein intumeszierendes Material, z.B. Blähgraphit, so gestreut, daß eine gleichmäßige Beschichtung entsteht. Die Graphitmenge kann zwischen 10 und 150 g/m² liegen. Zur besseren Bindung des intumeszierenden Materials, im Beispiel des Graphits, im Brandfalle können bei der Herstellung der Folie Borsäure oder deren Salze in kleineren Mengen (5-10%) zugesetzt werden. Borate geben endotherm Wasser ab, was die Brandtemperatur senkt, und schmelzen schließlich zu einer glasähnlichen Substanz zusammen, so daß das expandierte Material, z.B. Graphit, nicht so leicht auseinanderfällt. Als Alternative zum erwähnten Blähgraphit kommen Wasserglas (Na-Silikate), Borsäure und deren Salze, Vermiculite und Kombinationen aus Melamin/Pentaerythrit/Ammonium-Polyphosphat bzw. deren Derivaten in Frage.

Auf diese bestreute SK-Folie wird eine zweite, nicht bestreute SK-Folie geklebt. Als Ergebnis erhält man eine zwischen zwei SK-Folien gebundene Graphitschicht. Diese wird nachfolgend der Einfachheit halber Verbundfolie genannt. Auf den beiden Außenseiten dieser Verbundfolie befindet sich noch z.B. Silikonpapier, das das Verkleben beim Aufwickeln der Verbundfolie verhindert.

Bei der Bestreuung der ersten Folie ist unbedingt darauf zu achten, daß kein überschüssiges Intumeszenzmaterial auf der Folie verbleibt, da sonst die Haftung der zweiten Folie beeinträchtigt ist.

Der imprägnierte PU-Schaum wird mit dieser Verbundfolie einoder beidseitig kaschiert (verklebt). Der Grund, warum zwei doppelseitige Klebefolien verwendet werden, ist der, daß bei der Applikation des Schaumstoffkörpers die äußere Klebefolie nach dem Abziehen des Silikonpapiers als Montagehilfe genutzt werden kann. Das Verkleben des Schaumstoffkörpers an der Fugenflanke senkt den Rauchgasdurchtritt im Brandfalle, besonders bei unebenen Flanken, erheblich.

Bei dem zugrundeliegenden Schaumstoffkernmaterial ist es unerheblich, ob es sich um einzelne Schaumstoffplatten oder um sogenannte Rollenware (Abmessung: Breite: 1-1,5m; Länge: 30m oder ein Vielfaches davon; Dicke: 2-60mm) handelt.

Trotz der geringen Verbundfoliendicke von im Beispiel ca. 0,4mm reicht die Menge des im Brandfalle expandierenden Intumeszenzmaterials, z.B. des Graphits, aus, um eventuell auftretende Spalte und Risse im verkohlten PU-Schaum zu schließen. Das Expansionsvolumen von Blähgraphit liegt etwa beim 30- bis 40-fachen seines Ausgangsvolumens (ca. 3-5 mm pro Schicht beim Ausführungsbeispiel).

Die größten Vorteile gegenüber vergleichbaren Fugenfüllungslösungen liegen darin, daß:
- die Intumeszenzschicht sehr dünn ist,
- es sich um ein von Hause aus "trockenes" System handelt, das keiner Trocknung nach seiner Herstellung und nach der Applikation bedarf,
- die Menge des Intumeszenzmaterials variierbar ist,
- der PU-Schaum selbst feuerbeständig ausgerüstet ist,
- die Anwendung auf Metall möglich ist,
- die Verbundfolie als Montagehilfe einsetzbar ist,
- die Verbundfolie außenseitig angebracht sein kann, was Unebenheiten an den angrenzenden Bauwerksflächen bei der Expansion des intumeszierenden Materials ausgleicht,
- die Verbundfolie auch zwischen Schaumschichten eingelagert werden kann,
- die Verbundfolie selbst lagerbar und sehr einfach und beliebig konfektionierbar ist,
- der Gesamtkörper in allen Richtungen sehr flexibel und komprimierbar ist,
- der PU-Schaum alle elastischen Eigenschaften wie z.B. Biegeund Zugeigenschaften, Dauerelastizität ohne Probleme aufrechterhalten kann.

Erfindungsgemäß ist erkannt worden, daß dieser Schaumstoffkörper mit einer sehr viel größeren Anwendungsbreite, als nur als Fugenmaterial, zur Verfügung gestellt werden kann. Aufgrund der guten flexiblen Eigenschaften ist es möglich, den Schaumstoffkörper zu wickeln, z.B. um Elektrokabel oder Rohre damit zu umwickeln. Metallische Untergründe stellen kein Problem dar, da aufgrund des sehr kleinen Erweichungsbereiches kein Abschmelzen des PU-Schaums zu beobachten ist.

Ein weiteres Anwendungsfeld sind Formteile aus dem Schaumstoffkörper, insbesondere Brandschutzstopfen, die als temporäre und permanente Abschottung von noch nicht belegten Wanddurchbrüchen oder -durchführungen eingesetzt werden können. Die Stopfen werden beispielsweise einfach aus einem flächigen Material ausgestanzt.

Denkbar ist auch ein Einsatz der Erfindung als Füllung von Brandschutzkissen. Üblicherweise sind Brandschutzkissen mit Mineralwolle und/oder einem mehr oder weniger intumeszierenden Material gefüllte Glasfasersäckchen. Handelsübliche Brandschutzkissen sind nur wenig elastisch bzw. komprimierbar und werden hauptsächlich für größere Mauerdurchbrüche eingesetzt. Die Ausführungsform der Erfindung für diese Anwendung sieht ein Verpacken eines erfindungsgemäßen Schaumstoffkörpers in ein Glasfasergewebe vor, so daß ein direkter Flammenangriff auf den PU-Schaum verhindert und der Abbrand desselben verzögert wird. Durch die elastischen Eigenschaften des PU-Schaumes ist ein Anpassen an die Oberfläche der äußeren Umgebung (Kabel, Mauerwerk) sehr gut möglich.

Es gibt verschiedene Möglichkeiten, die Lehre der vorliegenden Erfindung in vorteilhafter Weise auszugestalten und weiterzubilden. Dazu ist einerseits auf die Unteransprüche, anderseits auf die nachfolgenden Erläuterungen von zwei Ausführungsbeispielen der Erfindung und sechs Verwendungen der Erfindung anhand der Zeichnung zu verweisen.

In der Zeichnung zeigen:
Fig. 1: in schematischer Darstellung einen Querschnitt durch eine vorgefertigte Verbundfolie,
Figur 2: in schematischer, quergeschnittener Darstellung eine Fuge mit dem eingebauten Brandschutzschaumkörper mit intumeszierender Selbstklebebeschichtung,
Figur 3a: in schematischer Perspektivdarstellung eine Frontansicht eines eingebauten Stopfens,
Figur 3b: in schematischer, quergeschnittener Darstellung ein kreisrundes Loch, das mit zwei ausgestanzten Stopfen verschlossen ist,
Figur 4a: in schematischer Perspektivdarstellung eine Frontansicht einer gewickelten Ausführungsform für kreisrunde Löcher, Figur 4b: in schematischer, quergeschnittener Darstellung ein kreisrundes Loch, das mit zwei gewickelten Stopfen verschlossen ist,
Figur 5a: in schematischer Darstellung eine Frontansicht einer Kabel- oder Rohrdurchführung, mit gewickelter Abdichtungsvariante, Figur 5b: in schematischer, quergeschnittener Darstellung eine Kabel- oder Rohrdurchführung, die an den beiden Lochenden mit gewickeltem Material abgedichtet ist,
Figur 6: in schematischer, quergeschnittener Darstellung ein mit dem Brandschutzschaumkörper gefülltes Brandschutzkissen,
Figur 7a: in schematischer Darstellung eine weitere Verwendung des erfindungsgemäßen Schaumstoffkörpers auf Kabeltrassen oder Kabelleitern,
Figur 7b: in schematischer, quergeschnittener Darstellung eine abgeschottete Kabeltrasse mit voran fixiertem, erfindungsgemäßem Schaumstoffkörper,
Figur 8a: in schematischer Darstellung eine weitere Verwendung des erfindungsgemäßen Schaumstoffkörpers für Einzelkabel oder Rohre,
Figur 8b: in schematischer, quergeschnittener Darstellung eine abgeschottete Durchführung eines Kabels oder eines Rohres, mit voran fixiertem, erfindungsgemäßem Schaumstoffkörper.

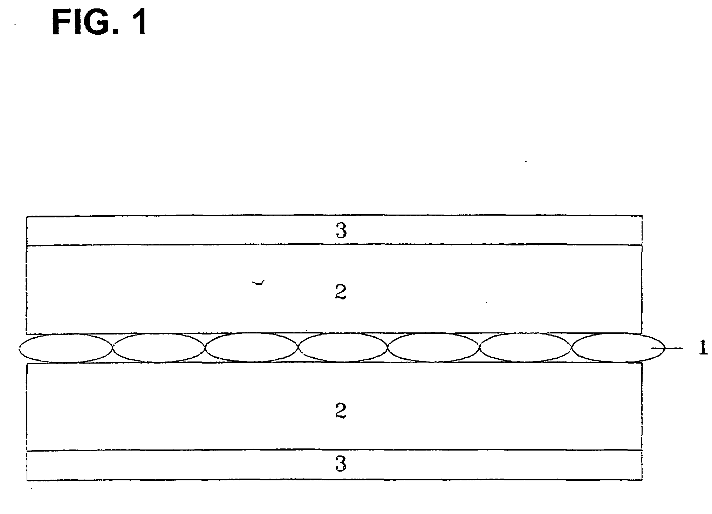

Figur 1 zeigt den Aufbau einer flammhemmenden Verbundfolie V, die im wesentlichen aus zwei Selbstklebefolien (2) und einer dazwischen eingeschlossenen Blähgraphitschicht (1) besteht. Ein Abdeckmaterial (3), beispielsweise ein Silikonpapier, das jeweils auf die Selbstklebefolien (2) außen aufgebracht ist, verhindert das ungewollte Verkleben beim Aufwickeln und Lagern der Verbundfolie V.

Die Darstellung ist nicht maßstabsgetreu, sondern soll nur den prinzipiellen Aufbau darstellen. Die Gesamtdicke der Verbundfolie V beträgt ungefähr 0,4 mm.

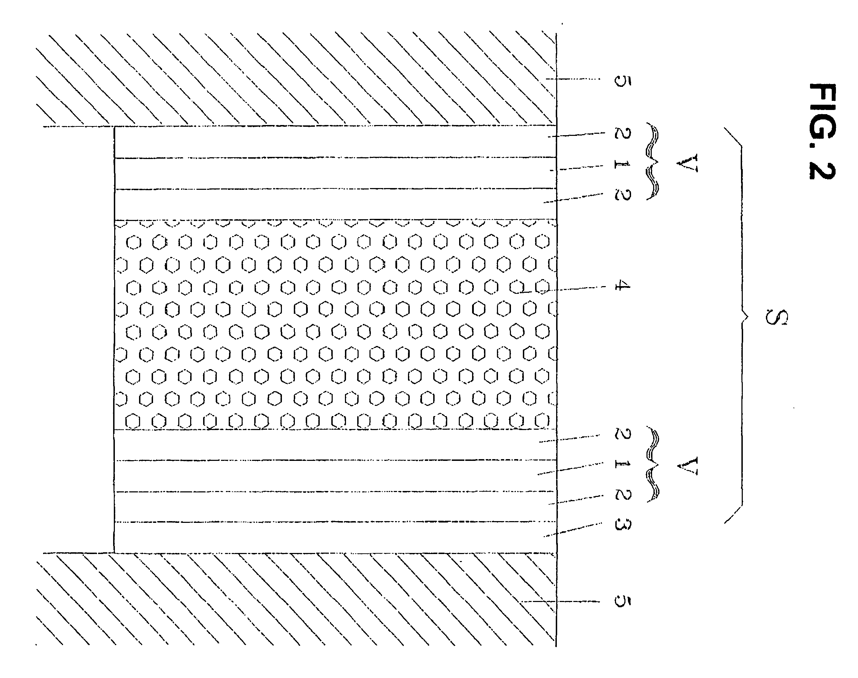

Die Figur 2 zeigt eine mögliche Ausführungsform eines Schaumstoffkörpers S mit einem Schaumstoffkern (4), der beiderseits mit einer Anordnung nach Fig. 1 versehen ist, wobei aber auf den dem Schaumstoffkern (4) benachbarten Seiten der Verbundfolien die Silikonpapiere (3) schon bei der Erstellung des Schaumstoffkörpers S entfernt worden sind, um die Verbundfolien V mit dem Schaumstoffkern (4) zu verkleben. Vor der Montage des Schaumstoffkörpers S in einer Bauwerksfuge, wie in der Zeichnung dargestellt, kann wenigstens eines der noch vorhandenen Silikonpapiere von dem flammhemmenden Schaumstoffkörper S entfernt werden, um diesen wenigstens einseitig mit der Flanke W der von Wänden 5 begrenzten Bauwerksfuge zu verkleben und dadurch an seinem Platz zu sichern. Dieser Zustand ist in Fig. 2 dargestellt. Selbstverständlich könnte auch das Silikonpapier 3 auf der anderen Seite des Schaumstoffkörpers S entfernt werden. Denkbar wäre auch eine Applikation mit beiden außenliegenden Silikonpapieren. So ist ein Einbau nach einer ungewollten Dekomprimierung des PU-Schaumes möglich, da das glatte Silikonpapier das Einbringen erleichtert.

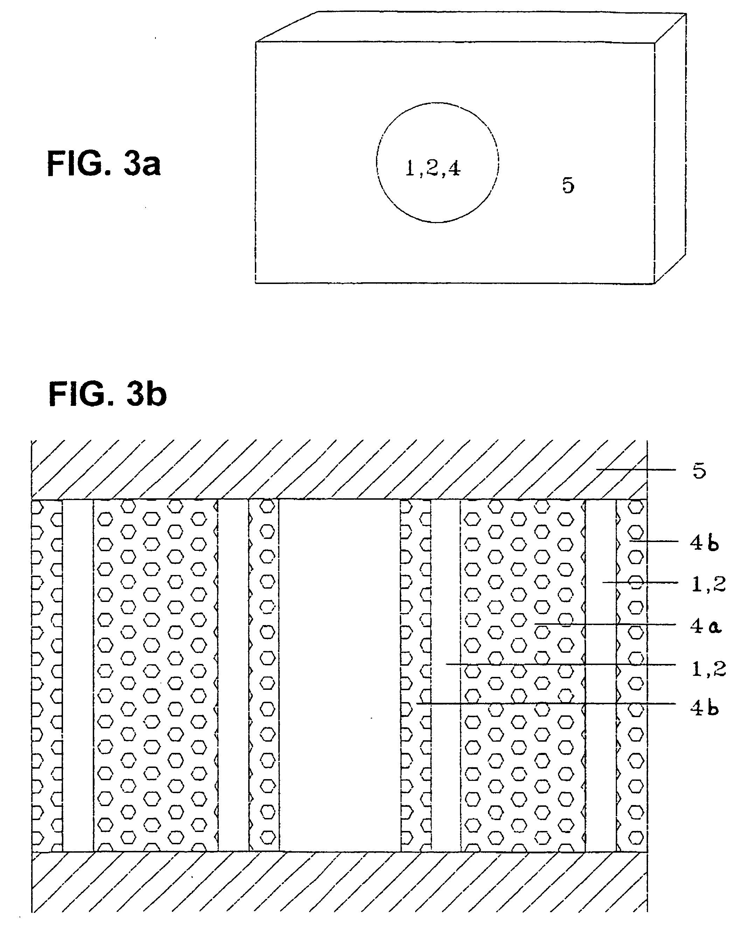

Fig. 3a zeigt den Einsatz eines erfindungsgemäßen Schaumstoffkörpers S als Stopfen in einem Durchbruch einer Mauerwand 5. Fig 3b zeigt die Anordnung von Fig. 3a im Längsschnitt. Demgemäß sitzen in dem Mauerdurchbruch zwei Stopfen hintereinander, ggf. in gegenseitigem Abstand, und die Stopfen bestehen jeweils aus einem ersten, inneren Schaumstoffkern 4a, der in der obengenannten Art getränkt ist, einer Verbundfolie gemäß Fig. 1 (ohne Silikonpapiere), in Fig. 3b durch die Bezugszeichen 1, 2 ihrer Bestandteile gekennzeichnet, auf jeder Seite des inneren Schaumstoffkerns 4a, und mit den Verbundfolien jeweils verklebten zweiten, äußeren Schaumstoffkern 4b, ebenfalls in der obengenannten Art getränkt.

Wie Fig. 3b zeigt, sind die Verbundfolien quer zur Erstreckung des Mauerdurchbruchs angeordnet, d.h. im Brandfalle quer zur Flamme, im Gegensatz zu der Anwendung nach Fig. 2, wo die Verbundfolien in Flammrichtung verlaufen

In dem Zwischenraum zwischen den beiden Stopfen kann ggf. Mineralwolle eingebaut sein.

Vorgenanntes sind vorteilhafte Anwendungsbeispiele. Es sei daher betont, daß es nahezu unbegrenzte Variationsmöglichkeiten zur Anordnung der Verbundfolie und der verwendbaren Schaumstoffdicken gibt.

Die Anwendung als Stopfen gemäß Fig. 3a und 3b stellt andere Anforderungen als die für Fugen gemäß Fig. 2. Es gibt z.B. keine Komprimierung, d.h. erstens, Wasser kann sehr leicht eindringen und zweitens Feuer und Rauch können im Brandfall schneller vorankommen. Als Lösung für diese Probleme ist eine Mehrfachanordnung der Verbundfolie, wie z.B. in Fig. 3b dargestellt, günstig. Diese Verbundfolien verhindern sowohl einen Wasserdurchtritt, als auch einen Feuer- und Rauchdurchtritt. Als Sicherheitsreserve kann vor der Applikation eine dünne Schicht einer feuerbeständigen Dichtungsmasse auf die Bauteillaibung aufgetragen werden.

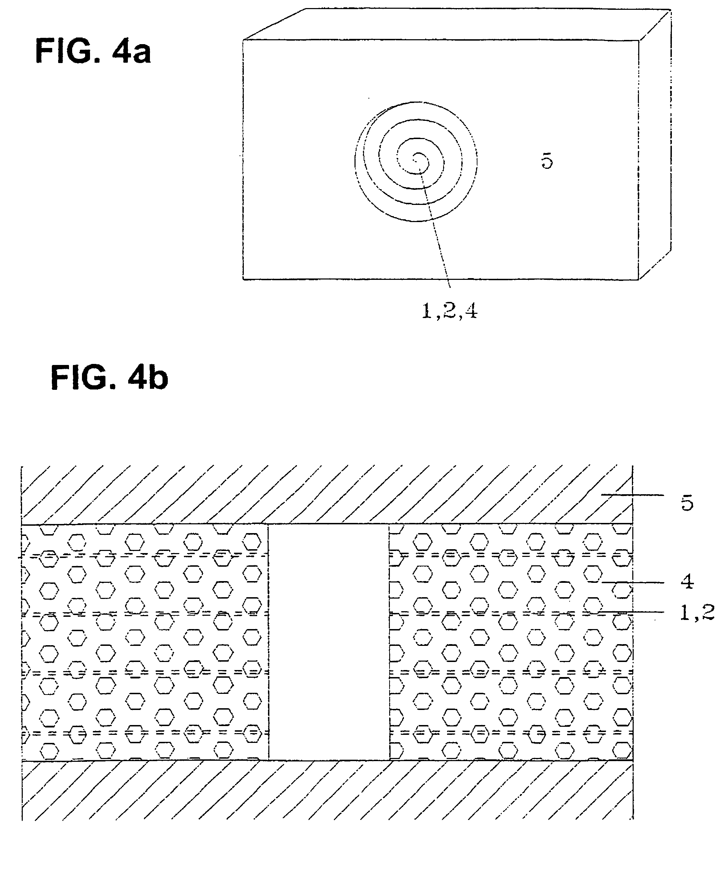

Fig. 4a und 4b zeigen als eine Alternative zum gestanzten Brandschutzstopfen der Fig. 3a und 3b das spiralige Aufwickeln eines relativ dünnen, streifenförmigen Schaumstoffkörpers der erfindungsgemäßen Art zur Erstellung eines Stopfens eines zum Ausfüllen eines Mauerdurchbruchs (Lochs) ausreichenden Durchmessers. Da der getränkte Schaumstoffkern 4 nach der Applikation noch etwas aufgeht, schließen sich kleinere Zwickel von selbst. Größere Lücken sollten mit einer Dichtungsmasse versiegelt werden. Die Fig. 4a und 4b sprechen im übrigen für sich selbst und brauchen daher nicht weiter erläutert zu werden.

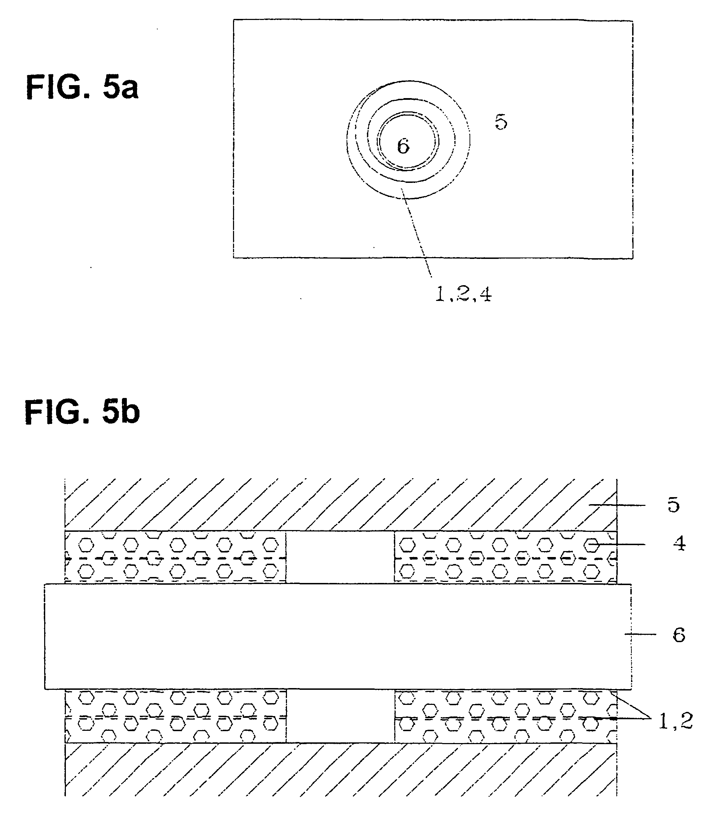

Figur 5 zeigt die gewickelte Ausführungsvariante für die Anwendung für Kabel- oder Rohrdurchführungen. Man erkennt ein Kabel 6 oder Rohr in einen Mauerdurchbruch, das von einem streifenförmig ausgebildeten, erfindungsgemäßen Schaumstoffkörper umwickelt ist. Dabei stellt die im Wickel innerste Selbstklebeschicht den mechanischen Halt am Kabel bzw. Rohr sicher, während die äußerste Schicht für einen Halt am Mauerwerk sorgt und beim Aufblähen des Intumeszenzmaterials dort Dichtungsfunktionen hervorruft.

Es ist möglich runde und eckige Durchführungen abzudichten. Vereinfacht wird die Applikation und die sichere Funktionsübernahme, wenn die geometrische Form des Durchbruchs mit der Form des Kabels, Rohres oder Lüftungskanales übereinstimmt. Auch im Brandfall ist die Anwendung auf Metall kein Problem, da der entstehende intumeszierende Schaum, beispielsweise aus Graphit, sich gegen das Metall und den verkohlten Schaumstoff aus dem Schaumstoffkern 4 drückt.

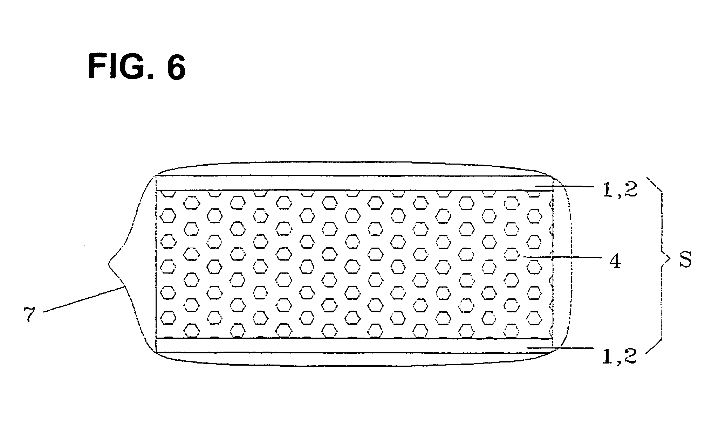

Eine weitere Verwendung des erfindungsgemäßen Schaumkörpers zeigt Figur 6. Es ist denkbar, daß der beidseitig mit Verbundfolie V beschichtete Schaumstoffkern 4 als Füllung für Brandschutzkissen dienen kann. Dazu wird ein Block des erfindungsgemäßen Schaumstoffkörpers S in ein Glasfasersäckchen 7 eingenäht. Das Glasfasergewebe verhindert einen schnellen Abbrand, da es Feuer / Rauch vom Schaumstoffkörper S trennt. Gegenüber herkömmlichen Brandschutzkissen besitzt diese Variante zwei wesentliche Vorteile. Erstens ist das Kissen formstabil und sehr gut handhabbar und zweitens ist es komprimierbar und kann noch etwas intumeszieren.

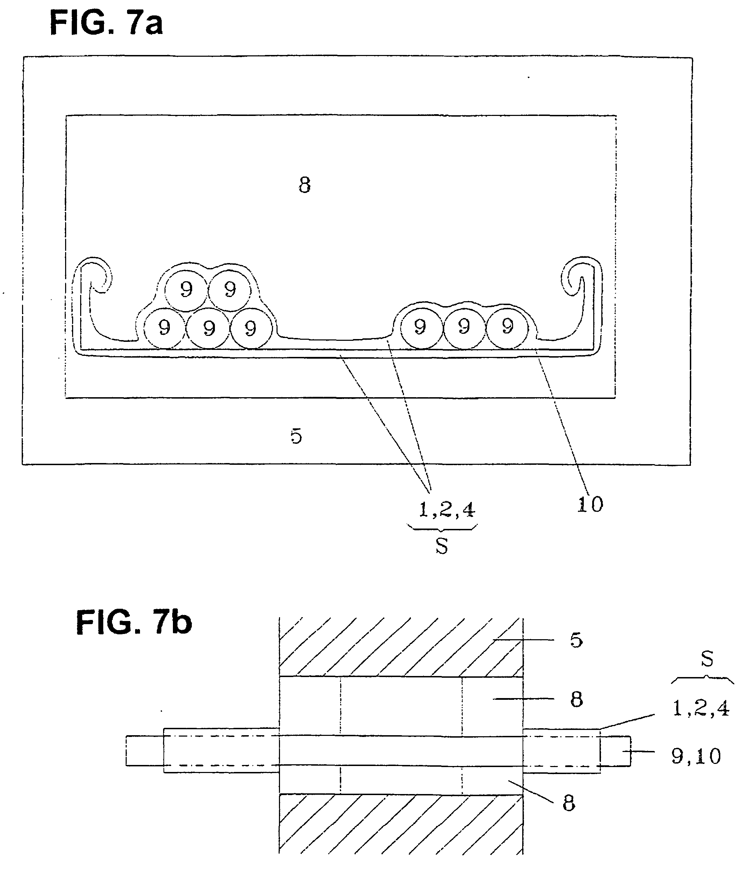

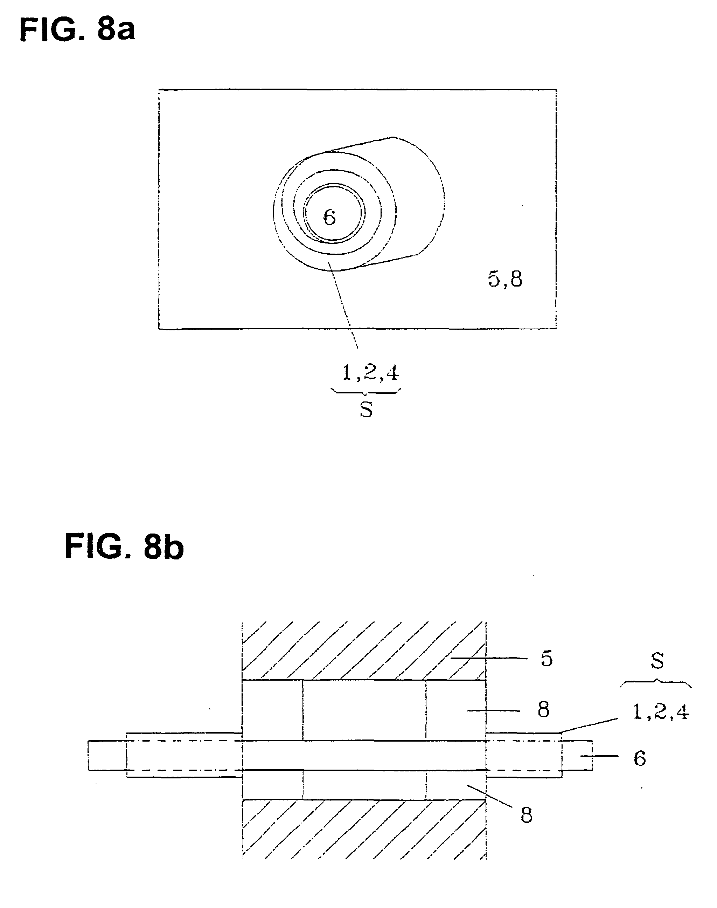

Die Figuren 7 und 8 zeigen die Anwendung als thermisches Isolationsmaterial für Kabel- und Rohrdurchführungen aller Art. Dabei wird vor und hinter einer bestehenden Abschottungseinrichtung 8 der zu schützende Untergrund der Abschottungseinrichtung mindestens einmal von dem erfindungsgemäßen Schaumstoffkörper, dargestellt mit den Bezugszeichen 1, 2, 4 seiner Bestandteile, berührt. Der Zweck besteht darin, daß nachträglich Maßnahmen für eine Verlängerung der Feuerwiderstandsdauer oder des Funktionserhaltes getroffen werden können. Bei den Anwendungen wirkt die Isolation hauptsächlich auf der feuerabgewandten Seite.

Eine Anwendung als Flammsperre auf Kabeltrassen 10 ist gemäß den Fig. 7a und 7b ebenfalls möglich. Solche Flammsperren sollen das Weiterbrennen von Kabeln auf Kabeltrassen verhindern. Die zugrundeliegende Idee ist, daß durch das Ummanteln der Kabel 6 die Sauerstoffzufuhr unterbunden wird, so daß das Feuer erlischt. Die Verbundfolie, vorzugsweise mit Blähgraphit als intumeszierendes Material darin, berührt die Kabel 6. Außenseitig sollte aber auf die Verbundfolie verzichtet werden, wenigstens dann, wenn sie Blähgraphit enthält, da dieser besser brennt, als der getränkte Schaumstoffkern.

## Patentansprüche

1. Schaumstoffkörper, insbesondere für Bauzwecke, bestehend aus einem feuerbeständigen Schaumstoffkern (4), und einer auf wenigstens eine Fläche des Schaumstoffkerns (4) aufgebrachten intumeszierenden Verbundfolie (V), **dadurch gekennzeichnet, daß** der Schaumstoffkern (4) mit einer feuerbeständigen Tränkung imprägniert ist, und daß die Verbundfolie (V) aus zwei Selbstklebefolien (2) und einer zwischen diesen eingeschlossenen Schicht aus einem intumeszierenden Material (1) besteht.

2. Schaumstoffkörper nach Anspruch 1, bei dem die Selbstklebefolien (2) jeweils auf beiden Oberflächen klebrig ausgerüstet sind.

3. Schaumstoffkörper nach Anspruch 1 oder 2, bei dem eine der Selbstklebefolien (2) einseitig mit einem pulvrigen intumeszierenden Material (1) bestreut bzw. beschichtet ist.

4. Schaumstoffkörper nach Anspruch 3, bei dem die Korngröße des intumeszierenden Materials zwischen 0,1 und 4 mm liegt.

5. Schaumstoffkörper nach einem der vorhergehenden Ansprüche, bei dem das intumeszierende Material Blähgraphit enthält.

6. Schaumstoffkörper nach einem der vorhergehenden Ansprüche, bei dem das intumeszierende Material Ammoniumpolyphosphat, insbesondere Ethylendiaminphosphat, enthält.

7. Schaumstoffkörper nach Anspruch 6, bei dem das intumeszierende Material Kombinationen aus Ammoniumpolyphosphat mit Melamin und Pentaerythrit enthält.

8. Schaumstoffkörper nach einem der vorhergehenden Ansprüche, bei dem das intumeszierende Material Vermiculit enthält.

9. Schaumstoffkörper nach einem der vorhergehenden Ansprüche, bei dem das intumeszierende Material Wasserglas (Na-Silikat) enthält.

10. Schaumstoffkörper nach einem der vorhergehenden Ansprüche, bei dem das intumeszierende Material Borsäure oder deren Salze enthält.

11. Schaumstoffkörper nach einem der vorhergehenden Ansprüche, bei dem der Schaumstoffkern (4) mit anorganischen Füllstoffen wie Ammoniumhydroxid, Magnesiumhydroxid oder Calciumcarbonaten und Brandschutzmitteln auf Phosphat-Basis getränkt ist.

12. Verwendung des Schaumstoffkörpers nach einem der vorhergehenden Ansprüche in einem Brandschutzkissen, in dem der Schaumstoffkörper (S) von einem Glasfasergewebe (7) umgeben ist.

13. Verwendung des Schaumstoffkörpers nach einem der Ansprüche 1 bis 11 als thermisches Isolationsmaterial vor und/oder hinter einer bestehenden Abschottungseinrichtung (8) zur Verlängerung der Feuerwiderstandsdauer bzw. des Funktionserhalts.

14. Verwendung des Schaumstoffkörpers nach einem der Ansprüche 1 bis 11 als Brandschutzstopfen in Wanddurchführungen, wobei der Stopfen als Stanzteil ausgebildet ist.

15. Verwendung des Schaumstoffkörpers nach einem der Ansprüche 1 bis 11 als gewickeltes Material für die Abdichtung von Wanddurchführungen bis etwa 20 cm Durchmesser.

16. Verwendung des Schaumstoffkörpers nach einem der Ansprüche 1 bis 11 als gewickeltes Material bei der Wanddurchführung von Einzelkabeln oder Kabelbündeln und nicht brennbaren Rohren.

## Claims

1. A foam body, in particular for building purposes, consisting of a fire-retardant foam core (4) and of a compound foil (V) applied onto at least one surface of the foam core and swelling under the influence of fire, **characterised in that** said foam core (4) is impregnated by a fire-retardant impregnation and said compound foil (V) consists of two self-adhesive foils (2) and an interposed layer of a material (1) swelling under the influence of fire.

2. A foam body as claimed in claim 1, wherein the self-adhesive foils (2) are provided to be tacky on both surfaces.

3. A foam body as claimed in claim 1 or 2, wherein one of the self-adhesive foils (2) is sprinkled or covered on one side by a powdery material (1) swelling under the influence of fire.

4. A foam body as claimed in claim 3, wherein the powdery material swelling under the influence of fire has a grain size which is between 0.1 and 4 mm.

5. A foam body as claimed in one of the preceding claims, wherein the swelling material contains swelling graphite.

6. A foam body as claimed in one of the preceding claims, wherein the swelling material contains ammonium polyphosphate, in particular ethylene diaminphosphate.

7. A foam body as claimed in claim 6, wherein the swelling material contains combinations of ammonium polyphosphate with melamine and pentaerythrit.

8. A foam body as claimed in one of the preceding claims, wherein the swelling material contains vermiculite.

9. A foam body as claimed in one of the preceding claims, wherein the swelling material contains soluble sodium (sodium silicate).

10. A foam body as claimed in one of the preceding claims, wherein the swelling material contains boric acid or the salts thereof.

11. A foam body as claimed in one of the preceding claims, wherein the foam core (4) is impregnated by inorganic filling material like ammonium hydroxide, magnesium hydroxide or calcium carbonate and phosphate-based fire protection agents.

12. Use of the foam body as claimed in one of the preceding claims in a fire protection cushion, wherein the foam body (S) is surrounded by a glass fiber tissue (7).

13. Use of the foam body as claimed in one of claims 1 to 11 as a thermal insulation material in front of and/or behind an existing shielding means (8) for elongating the fire resistance duration or for maintaining the function of said shielding means (8).

14. Use of the foam body as claimed in one of claims 1 to 11 as a fire protection plug in wall openings, wherein the plug is formed as a punched member.

15. Use of the foam body as claimed in one of claims 1 to 11 as a wound material for sealing wall openings of a diameter of up to approximately 20 cm.

16. Use of the foam body as claimed in one of claims 1 to 11 as a wound material in a wall passage of a single cable or a cable bundle and a non-combustible tube.

## Revendications

1. Elément en mousse, en particulier pour le bâtiment, composé d'un coeur de mousse (4) réfractaire et d'une feuille multicouche (V) intumescente appliquée sur au moins une surface du coeur de mousse (4), **caractérisé en ce que** le coeur de mousse (4) est imbibé d'une imprégnation réfractaire et **en ce que** la feuille multicouche (V) se compose de deux feuilles autoadhésives (2) et d'une couche d'un matériau intumescent (1) incluse entre ces dernières.

2. Elément en mousse suivant la revendication 1, dans lequel chaque feuille autoadhésive (2) est rendue adhésive sur les deux surfaces.

3. Elément en mousse suivant l'une des revendications 1 et 2, dans lequel l'une des feuilles autoadhésives (2) est saupoudrée et/ou revêtue unilatéralement d'un matériau intumescent pulvérulent (1).

4. Elément en mousse suivant la revendication 3, dans lequel la grosseur de grains du matériau intumescent se situe entre 0,1 et 4 mm.

5. Elément en mousse suivant l'une des revendications précédentes, dans lequel le matériau intumescent renferme du graphite expansé.

6. Elément en mousse suivant l'une des revendications précédentes, dans lequel le matériau intumescent renferme du polyphosphate d'ammonium, en particulier de l'éthylènediamine phosphate.

7. Elément en mousse suivant la revendication 6, dans lequel le matériau intumescent renferme des combinaisons de polyphosphate d'ammonium avec de la mélamine et du pentaérythrite.

8. Elément en mousse suivant l'une des revendications précédentes, dans lequel le matériau intumescent renferme de la vermiculite.

9. Elément en mousse suivant l'une des revendications précédentes, dans lequel le matériau intumescent renferme du verre soluble (silicate de soude).

10. Elément en mousse suivant l'une des revendications précédentes, dans lequel le matériau intumescent renferme de l'acide borique ou des sels de ce dernier.

11. Elément en mousse suivant l'une des revendications précédentes, dans lequel le coeur de mousse (4) est imprégné de charges minérales, telles qu'hydroxyde d'ammonium, hydroxyde de magnésium ou carbonates de calcium et d'agents ignifuges à base de phosphate.

12. Utilisation de l'élément en mousse suivant l'une des revendications précédentes dans un coussin pare-feu, dans lequel l'élément en mousse (S) est entouré d'un tissu de fibres de verre (7).

13. Utilisation de l'élément en mousse suivant l'une des revendications 1 à 11 en tant que matériau d'isolation thermique devant et/ou derrière un dispositif de cloisonnement (8) existant pour prolonger la durée de résistance au feu et/ou le maintien de la fonction.

14. Utilisation de l'élément en. mousse suivant l'une des revendications 1 à 11 en tant que bouchon pare-feu dans des traversées murales, le bouchon étant réalisé sous forme de pièce découpée.

15. Utilisation de l'élément en mousse suivant l'une des revendications 1 à 11 en tant que matériau enroulé pour l'étanchéification de traversées murales d'un diamètre jusqu'à environ 20 cm.

16. Utilisation de l'élément en mousse suivant l'une des revendications 1 à 11 en tant que matériau enroulé dans la traversée murale de câbles individuels ou de faisceaux de câbles et de tubes incombustibles.
